# EUROPEAN PATENT APPLICATION

(11) **EP 1 727 252 A1**
(43) Date of publication of application: **29.11.2006**
(21) Application number: 05425370.3
(22) Date of filing: 26.05.2005
(51) Int. Cl.: H02G 3/04, H02G 3/06

(54) **Joining device for mesh cable trays**

(71) Applicant: Legrand S.p.A., 20080 Zibido San Giacomo (Milano) (IT)
(72) Inventor: Garassino, Luca, 15067 Novi Ligure (IT); Finco, Alan, 15047 Spinetta Marengo (IT)
(74) Representative: Rondano, Davide

(57) **Abstract**

The device (10) is constituted by a single sheet-metal element integrally forming: a plate portion (12) of substantially rectangular, longitudinally elongated shape, intended to be brought into abutment against portions of the vertical (7) or bottom (6) branches of two facing end transverse wires (5) of two mesh cable tray sections (1, 2) to be connected; a pair of curved portions (14) projecting from a longitudinal edge (12a) of the plate portion (12) so as to embrace at least partially respective aligned longitudinal wires (3) of the two tray sections (1, 2); first and second tabs (16, 18, 20) projecting transversely from the plate portion (12) so as to restrain longitudinally in both directions the two end transverse wires (5); and third tabs (26) projecting substantially parallel to the two end transverse wires (5) and transversely spaced apart from the plate portion (12). The third tabs (26) are arranged to be bent so as to extend substantially perpendicularly to the vertical (7) or bottom (6) branches of the two end transverse wires (5) to lock transversely these wires.

## Description

The present invention relates to a joining device for mesh cable trays, as specified in the preamble of Claim 1.

In order to receive and protect cables, particularly electrical cables, mesh cable trays are commonly used which comprise a plurality of longitudinal and transverse wires connected to each other so as to form a mesh. The term longitudinal will indicate hereinafter a direction parallel or substantially parallel to the direction along which the tray runs, whereas the term transverse will indicate a direction laying in a plane perpendicular to the direction along which the tray runs. The transverse wires generally include a horizontal bottom branch from the ends of which two parallel vertical branches extend, whereby each transverse wire has a generally U-like shape.

The mesh cable trays are produced in sections of given length, the opposite longitudinal ends of which are defined by respective transverse wires, hereinafter indicated with the term end transverse wires. In order to connect two separate mesh cable tray sections, first the ends of two tray sections are brought close to each other and then the two adjacent end transverse wires are coupled to each other by means of joining devices mounted on their vertical branches and/or on their bottom branch.

A joining device for connection of two adjacent mesh cable tray sections is known from European Patent Application EP-A-1 318 585 in the name of the Applicant. This known joining device comprises a plate element intended to engage the end portions of a pair of essentially aligned longitudinal wires of the two adjacent mesh cable tray sections to be connected, and at least one joining clamp intended to couple and restrain the two end transverse wires of the two adjacent mesh cable tray sections to be connected. The joining clamp is fixed to the plate element and includes first and second elements which define seat for receiving and retaining respective portions of the two end transverse wires. The two element of the joining clamp are connected to each other by articulation means so as to be rotated relative to each other between an open position, in which the end transverse wires can be inserted into the respective seats, and a closed position, in which the end transverse wires are locked. Latch connection means are also provided to secure the two elements of the joining clamp in the closed position upon rotation of these elements from the open position to the closed position.

This known arrangement thus comprise at least two separate parts, that is to say the two element forming the joining clamp, which have to be produced separately and then assembled. This makes the manufacturing process of the joining device difficult and therefore does not permit to produce the device at low cost.

It is therefore the object of the present invention to provide a joining device for mesh cable trays which has a simpler structure than the prior art discussed above and which can be produced with simple cutting and bending operations starting from a single sheet-metal blank.

This object is fully achieved according to the invention by virtue of a joining device having the characteristics defined in independent Claim 1.

In short, the present invention is based on the idea of constructing the joining device as a single sheet-metal element integrally forming:
a substantially rectangular plate portion intended to rest against lengths of the vertical or bottom branches of the two end transverse wires of the two mesh cable tray sections to be connected;
a pair of curved portions projecting from a longitudinal edge of the rectangular plate portion, the said portions being shaped so as to embrace at least partially respective lengths of a pair of aligned longitudinal wires of the two tray sections;
a pair of first tabs projecting transversely from a middle area of the rectangular plate portion, the said first tabs being aligned to and spaced from each other along the transverse direction and being intended to be interposed between the said lengths of the vertical or bottom branches of the two end transverse wires in order to restrain the longitudinal movement of the two tray sections towards each other;
a pair of second tabs projecting transversely from the rectangular plate portion on the longitudinally opposite sides with respect to the first pair of projecting tabs, said second tabs being longitudinally aligned with each other and spaced from the first tabs by a distance substantially equal to the diameter of the transverse wires, so as to define with the first tabs a pair of seats in which to receive the two end transverse wires and to restrain the longitudinal movement of the two tray sections away from each other; and
a pair of third tabs projecting substantially parallel to the two end transverse wires so as to allow these latter to be inserted into the respective seats, said third tabs being arranged to be folded over so as to extend substantially longitudinally and lock transversely the two end transverse wires on the opposite side with respect to the rectangular plate portion.

The characteristics and the advantages of the invention will become apparent from the detailed description which follows, given purely by way of non-limiting example with reference to the appended drawings, in which:
Figure 1 is a perspective view of a joining device according to a preferred embodiment of the present invention;
Figure 2 is a perspective view which shows in detail the joining device of Figure 1 in the condition in which it is temporarily mounted on a flank of the two adjacent mesh cable tray sections to be connected;
Figure 3 is a perspective view which shows the adjacent end portions of the two mesh cable tray sections connected by means of a first and a second joining device according to the present invention, arranged on a flank and on the bottom of the two sections, respectively, the first device being illustrated in a stable mounting condition; and
Figure 4 is a plane view of a sheet metal blank from which the joining device of Figure 1 is obtained.

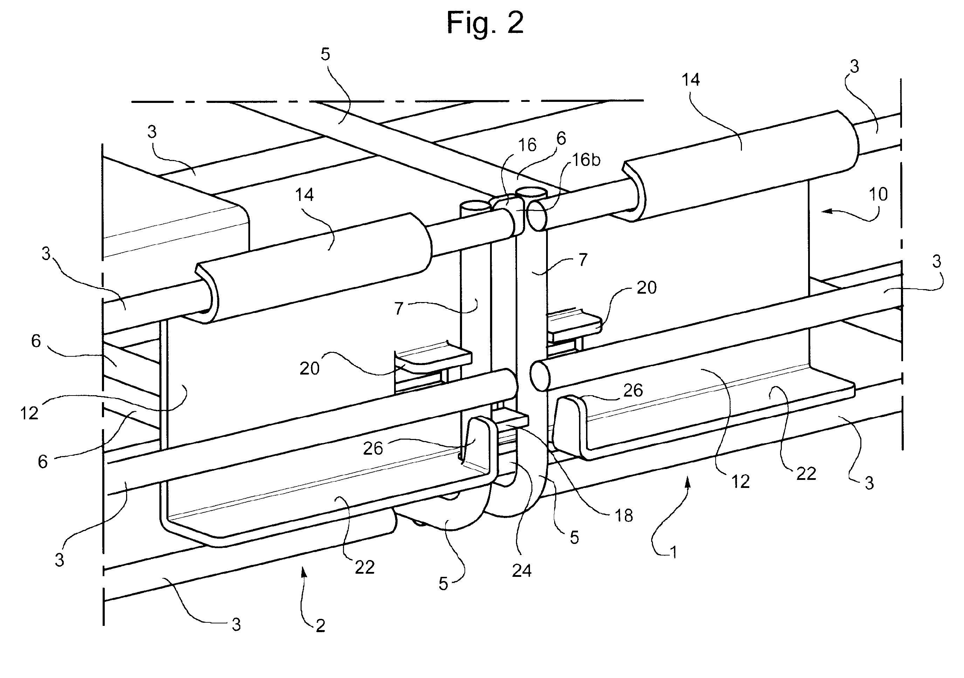

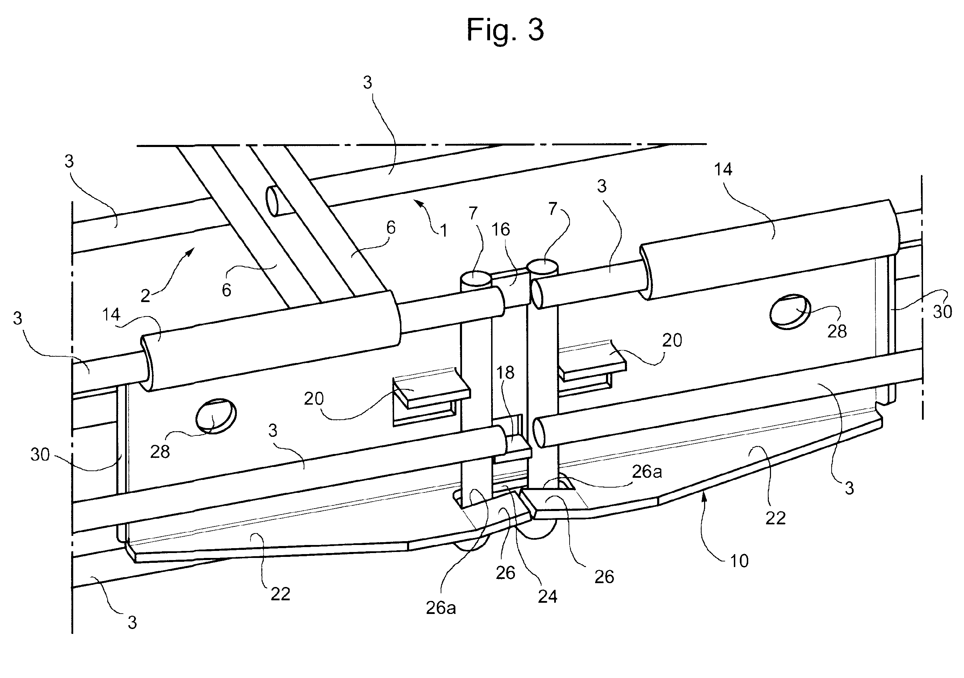

In the following description, terms such as "vertical", "horizontal", "inner" and "outer" are referred for the sake of simplicity to the case (shown in Figure 2) in which the joining device is mounted on the end portions of the two mesh cable tray sections to be connected so as to engage the vertical branches of the end transverse wires of the two sections. It is however clear (see for example Figure 3) that the same joining device can be mounted also on the bottom of the two mesh cable tray sections to be connected.

With reference first to Figures 2 and 3, numerals 1 and 2 indicate first and second adjacent mesh cable tray sections, respectively, each of which comprises a number of longitudinal metal wires 3 and a number of transverse metal wires 5, connected to each other to form a grid. Each transverse wire 5 includes a bottom, commonly straight branch 6, from the ends of which a pair of parallel vertical branches 7 extend, whereby each transverse wire 5 has a general U-like shape.

The two mesh cable tray sections 1 and 2 are connected to each other by means of several joining devices 10, usually three devices, two of which are arranged on the flanks of the tray and one of which is arranged on the bottom of the tray. Figure 3 shows only two joining devices 10, a first of which is arranged on a flank of the tray so as to engage the vertical branches 7 of the two end transverse wires 5 of the adjacent tray sections 1 and 2, while a second device is arranged on a flank of the tray so as to engage the bottom branches 6 of the two end transverse wires 5.

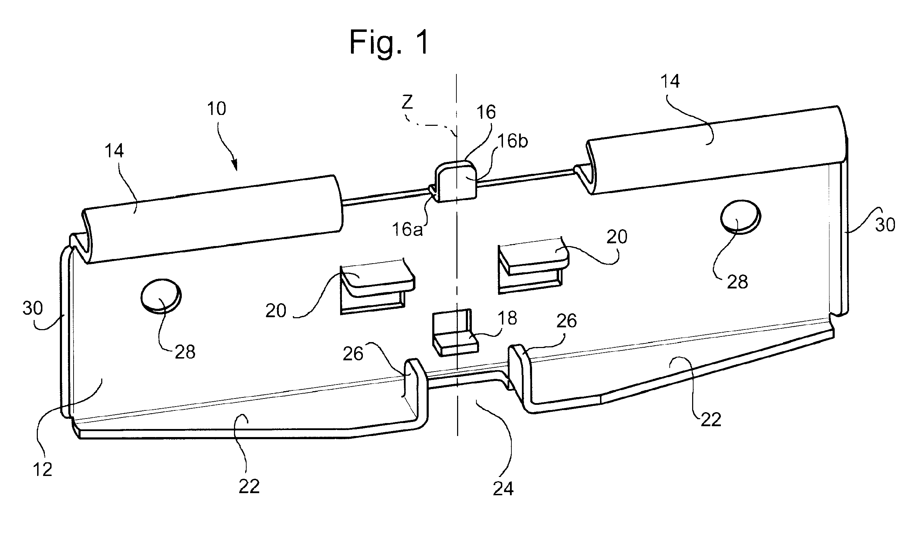

Referring now also to Figure 1, the joining device 10 is produced as a single sheet-metal component integrally forming:
a plate portion 12 of substantially rectangular shape intended to be brought into abutment against the vertical branches 7 (or against the bottom branches 6) of the two end transverse wires 5 so as to lock the two transverse wires 5 on the transversely inner side;
a pair of curved hooking portions 14 which project from a longitudinal upper edge 12a of the plate portion 12 and are shaped so as to embrace, at least partially, respective lengths of the two aligned longitudinal wires 3 of the two tray sections 1 and 2;
a pair of central tabs 16 and 18 projecting transversely from a central region of the plate portion 12 in order to restrain the relative longitudinal movement of the two tray sections 1 and 2 towards each other;
a pair of lateral tabs 20 projecting transversely from the plate portion 12 on the longitudinally opposite sides with respect to the pair of first tabs 16 and 18 in order to restrain the relative longitudinal movement of the two tray sections 1 and 2 away from each other;
a lower flat appendage 22 which is bent substantially at a right angle with respect to the plate portion 12 and extends from a lower edge thereof to the same side as the first and second tabs 16, 18 and 20, the appendage 22 having in a longitudinally middle portion thereof an opening 24 of substantially rectangular shape open to the outer edge of the appendage 22; and
a pair of outer tabs 26 which are bent substantially at a right angle with respect to the appendage 22 and extend from the opposite transverse edges of the opening 24.

The rectangular plate portion 12 extends along the longitudinal direction of the tray and has a height (length of the shorter side of the rectangle) which is less than the height of the flanks of the tray. In this way, when the joining device 10 is mounted on a flank of the tray (Figure 2), with the curved hooking portions 14 engaging the respective longitudinal wires 3 which limit the flanks of the tray from above, the lower flat appendage 22 is placed within the flank of the tray and the outer tabs 26 can thus engage the vertical branches 7 of the tray, as will be better explained in the following part of the description.

Moreover, as can be seen clearly from Figure 1, the joining device advantageously has a symmetric configuration with respect to the minor axis, indicated Z, of the plate portion 12.

The curved hooking portions 14 extend each from a side of the plate portion 12 with respect to the axis Z, so as to cooperate each with a longitudinal wire 3 of a respective tray section 1, 2. These portions have the function of securing the joining device 10 to the bottom or the flank of the tray, thereby preventing the device from displacing in the direction of the bottom branches 6 or of the vertical branches 7, respectively, of the transverse wires 5 and from rotating in the plane of the bottom or of the flank, respectively, of the tray. Clearly, a plurality of curved hooking elements, spaced along the upper edge 12a of the plate portion 12 could be provided instead of the only two curved portions.

In the illustrated embodiment, the central tabs 16 and 18 are aligned with each other along the axis Z and extend the one from the upper edge 12a of the plate portion 12 and the other close to the opposite edge. In this case, the tab 16 is formed by a first appendage 16a bent at a right angle with respect to the plate portion 12 on the side facing the branches of the transverse wires to be engaged and by a second appendage 16b which extends from the free end of the first appendage 16a towards the outside of the plate portion 12 and parallel thereto. The tab 18 is formed, on the other hand, simply by a single appendage bent at a right angle with respect to the plate portion 12.

As previously mentioned, the two central tabs 16 and 18 have the function to restrain the longitudinal movement of two tray sections 1 and 2 towards each other, since in the mounted position of the device 10 (Figure 2) they are interposed between the two branches 6 or 7 of the end transverse wires 5 engaging with the device and form, with their opposite parallel edges, abutment surfaces for these branches. To this end, the two central tabs 16 and 18 preferably have the same width, that is to say, the same longitudinal size, so as to offer abutment surfaces parallel to each other.

It is clearly possible to provide a larger number of central tabs. Moreover, the central tabs could be orientated vertically with respect to the point of view of the observer of Figures 1 and 2, rather than horizontally. In this case, of course, they will be no more aligned along the axis Z, but offset from each other. Finally, one or more central projections produced by plastic deformation of the plate portion 12 could be provided instead of the tabs.

In the illustrated embodiment, the two lateral tabs 20 are formed each by a single appendage bent at a right angle with respect to the plate portion 12 on the same side of the central tabs 16 and 18. The two lateral tabs 20 are orientated horizontally, with respect to the point of view of the observer of Figure 1, and form with their longitudinally facing edges abutment surfaces for the two branches 6 or 7 of the end transverse wires 5 to be connected.

Preferably, though not necessarily, the two lateral tabs 20 lay in the same plane, that is to say, they are aligned with each other along the longitudinal direction. Moreover, the two lateral tabs 20 are spaced apart from the central tabs 16 and 18 by a distance equal to or slightly greater than the diameter of the transverse wires 5, so as to define with the central tabs a pair of seats in which to receive the two end transverse wires to be connected.

Clearly, also in this case a greater number of lateral tabs can be provided. Moreover, the lateral tabs could be orientated vertically. Finally, one or more projections obtained by plastic deformation of the plate portion 12 could be provided instead of the tabs.

The central rectangular opening 24 provided in the lower flat appendage 22 has a width, that is to say, a longitudinal size, such as to accommodate the two end transverse wires 5 to be connected. Preferably, the width of the opening 24 is substantially equal to the distance between the abutment surfaces of the lateral tabs 20, in such a manner that also the parallel facing edges of the opening contribute to restrain longitudinally the two end transverse wires 5.

The outer tabs 26 project from the parallel facing edges of the central rectangular opening 24 of the lower flat appendage 22, and more precisely from the ends of these edges furthest from the plate portion 12, in so as to leave enough free space between the tabs 26 and the bottom of the opening 24 to accommodate the two end transverse wires 5 to be connected. The joining device is manufactured with the outer tabs 26 bent at a right angle with respect to the lower flat appendage 22, so as to extend in a direction substantially parallel to the axis Z, that is to say to the two transverse wires 5 which will be accommodated in the respective seats formed by the joining device 10. Once the joining device 10 is arranged on the tray with the two end transverse wires 5 accommodated in the respective seats (Figure 2), the outer tabs 26 can be bent towards each other until they reach a final mounting position, shown in Figure 3, in which they enclose the opening 24 from the outside, thus retaining transversely the two transverse wires 5.

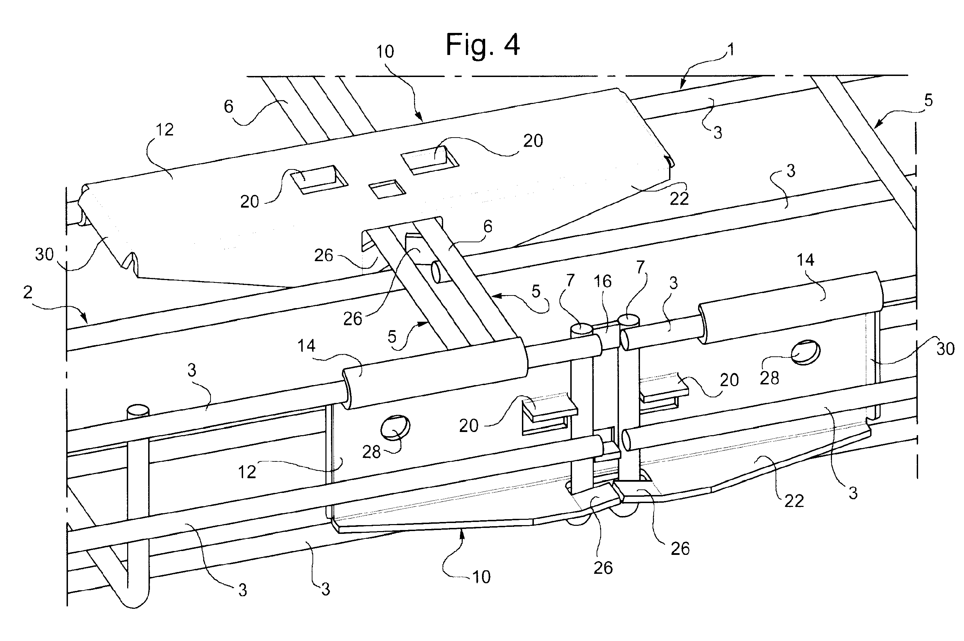

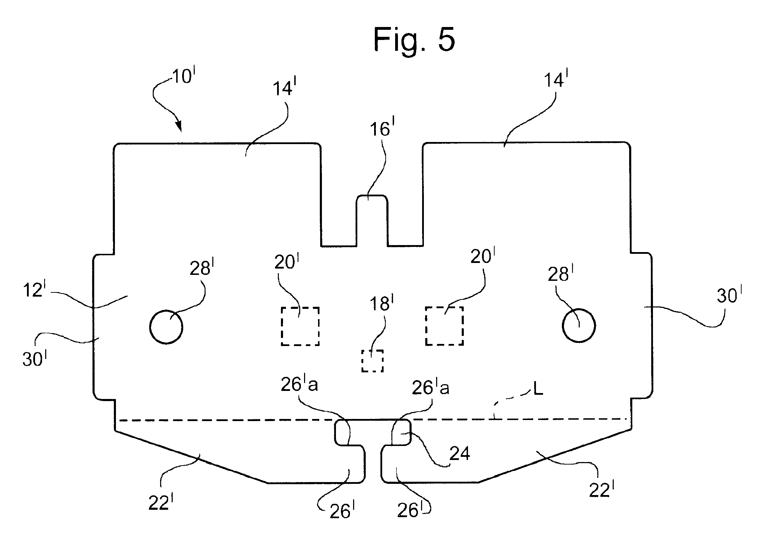

According to the invention, the joining device 10 can be easily manufactured starting from a flat sheet-metal blank piano 10' shown in Figure 4. For the ease of understanding, the portions of the blank 10' corresponding to the different parts of the joining device 10 are designated by the same reference numerals used in Figures 1 and 2, with the addition of an apostrophe.

First of all, the blank 10' comprises a central, substantially rectangular portion 12' corresponding to the plate portion 12 of the joining device 10. A pair of rectangular portions 14' intended to form the curved hooking portions 14, and a central tab 16' therebetween, intended to be suitably bent in order to form the upper central tab 16, extend from the upper longitudinal edge of the central rectangular portion 12'. The lower edge of the central rectangular portion 12', indicated 22', is intended to be bent at a right angle along a bending line L in order to form the lower flat appendage 22. The lower appendage 22' has at its centre a substantially rectangular opening 24', which extends from the bending line L and opens outwards. A pair of tabs 26' intended to be bent at a right angle with respect to the lower appendage 22' to assume the initial mounting configuration shown in Figures 1 and 2 extend towards each other from the two parallel facing edges of the opening 24'. In the rectangular central portion 12' are also defined by dashed line and indicated 18' and 20', respectively, a rectangular area intended to be bent at a right angle to form the lower central tab 18, and a pair of rectangular areas, on longitudinally opposite sides with respect to the above-mentioned central area, intended to be bent at a right angle to form the two lateral tabs 20.

As will be apparent from the preceding description, a joining device according to the invention is extremely easy to use, makes it possible to connect stably and safely two adjacent tray sections and can be manufactured at a very low cost.

Naturally, the principle of the invention remaining unchanged, embodiments and manufacturing details may vary widely from those described and illustrated purely by way of non-limiting example.

## Claims

1. A joining device (10) for mesh cable trays comprising a series of longitudinal wires (3) and a series of transverse wires (5) connected to each other so as to form a mesh, wherein the transverse wires (5) include a bottom branch (6) from the ends of which two parallel vertical braches (7) extend, whereby each transverse wire (5) has a generally U-like shape with a bottom and a pair of sides; the device (10) being **characterized in that** it is constituted by a single sheet-metal element integrally forming:
a plate portion (12) of longitudinally elongated shape, intended to be brought into abutment against portions of vertical (7) or bottom (6) branches of the two facing end transverse wires (5) of two adjacent mesh cable tray section (1, 2) to be connected;
first retaining means (14) for engaging at least one longitudinal wire (3) of one of the two adjacent mesh cable tray sections (1, 2) to be connected and at least one longitudinal wire (3) of the other mesh cable tray section (2, 1) to be connected; and
second retaining means (18, 20, 22, 24, 26) for keeping the plate portion (12) and said portions of vertical (7) or bottom (6) branches of the two facing end transverse wires (5) of the said adjacent mesh cable tray sections (1, 2) to be connected in engagement with each other.

2. A device according to Claim 1, wherein said first retaining means include curved portions (14) which project from a longitudinal edge (12a) of the plate portion (12) and are arranged to embrace at least partially respective lengths of two aligned longitudinal wires (3) of the two adjacent mesh cable tray sections (1, 2) to be connected.

3. A device according to Claim 1 or Claim 2, wherein said second retaining means (18, 20, 22, 24, 26) include a plurality of projecting formations (16, 18, 20) which project transversely from the plate portion (12) and are arranged to restrain longitudinally in both directions the two facing end transverse wires (5) of the two adjacent mesh cable tray sections (1, 2) to be connected.

4. A device according to Claim 3, wherein said plurality of projecting formations (16, 18, 20) includes
first tabs (16, 18) arranged to be interposed between the vertical branches (7) or the bottom branches (6) of the two facing end transverse wires (5), so as to restrain the longitudinal movement of the two adjacent tray sections (1, 2) towards each other; and
second tabs (20) which project from longitudinally opposite sides with respect to the first tabs (16, 18) and define therewith a pair of seats for receiving the two facing end transverse wires (5), said second tabs being arranged to restrain the longitudinal movement of the two adjacent tray sections (1, 2) away from each other.

5. A device according to Claim 4, wherein said first tabs (16, 18) include a pair of aligned and transversely spaced apart tabs.

6. A device according to Claim 4, wherein said second tabs (20) include a pair of longitudinally aligned tabs.

7. A device according to Claim 1 or Claim 2, wherein said second retaining means (18, 20, 22, 24, 26) include a pair of third tabs (26) which extend substantially transversely and are spaced apart from the plate portion (12) by a distance at least equal to the diameter of the vertical (7) or bottom (6) branches of the end transverse wires (5), said third tabs (26) being arranged to be bent so as to extend substantially perpendicularly to the vertical (7) or bottom (6) branches of the two facing end transverse wires (5) to lock transversely said wires.

8. A device according to Claim 3, wherein said single sheet-metal element also forms an appendage (22) which is bent at a substantially right angle with respect to the plate portion (12) on the same side as the projecting formations (16, 18, 20) and has an opening (24) which opens to the outer edge thereof to receive the vertical (7) or bottom (6) branches of the two end transverse wires (5).

9. A device according to Claims 7 and 8, wherein said third tabs (26) are bent at a substantially right angle with respect to the appendage (22) and extend from two opposite transverse edges of the opening (24).

10. A device according to any of the preceding claims, wherein the plate portion (12) has a substantially rectangular shape, the length of the shorter side of the rectangle being less than the height of the flanks of the two tray sections (1, 2) to be connected.

11. A device according to any of the preceding claims, wherein the plate portion (12) has a a symmetric configuration with respect to a transverse axis (Z).

12. A device according to Claim 4 when depending on Claim 2, wherein one (16) of said first tabs (16, 18) extends from said longitudinal edge (12a) of the plate portion (12) and another (18) in the vicinity of the opposite edge.

13. A device according to Claim 4, wherein said first tabs (16, 18) extend perpendicularly to the direction of the vertical (7) or bottom (6) branches of the two end transverse wires (5) to be connected.

14. A device according to Claim 4, wherein said second tabs (20) extend perpendicularly to the direction of the vertical (7) or bottom (6) branches of the two end transverse wires (5) to be connected.
